# EUROPEAN PATENT SPECIFICATION

(11) **EP 0 325 657 B1**
(45) Date of publication and mention of the grant of the patent: **26.01.1994**
(21) Application number: 87905472.4
(22) Date of filing: 19.08.1987
(51) Int. Cl.: F27B 15/10

(54) **GAS DIFFUSING NOZZLE DEVICE FOR FLUIDIZED BED FURNACE**
GASZERSTÄUBERDÜSE FÜR EINEN FLIESSBETTOFEN
BUSE DE DIFFUSION DE GAZ POUR FOUR A LIT FLUIDISE

(30) Priority: 14.10.1986 JP 242055/86
(43) Date of publication of application: 02.08.1989
(73) Proprietor: KABUSHIKI KAISHA KOMATSU SEISAKUSHO, Minato-ku Tokyo 107 (JP)
(72) Inventor: TAKENOSHITA, Hidemitsu, Hirakata-shi Osaka-fu 573 (JP); HATTORI, Hisashi, Hirakata-shi Osaka-fu 573 (JP); HANADA, Yoichiro, Hirakata-shi Osaka-fu 573 (JP)
(74) Representative: Grünecker, Kinkeldey, Stockmair & Schwanhäusser Anwaltssozietät
(86) International application number: JP8700615
(87) International publication number: WO8802839

(56) References cited:
- JP-B-57 415 73
- JP-C-48 375 0
- JP-Y-61 133 796
- No further relevant documents have been disclosed.

## Description

This invention relates to a gas dispersion nozzle apparatus for use in a fluidized bed furnace according to the preamble of claim 1.

Gas dispersion nozzle apparatuses for use in fluidized bed furnaces are required to have the following performances.
(1) They have high heat-resistance and durability
(2) They are capable of uniformly fluidizing a fluidized bed which is comprised of refractory particles in a retort at every temperature, and
(3) They are capable of minimizing the heat flow from the lower portion of the retort.

As one of gas dispersion nozzle apparatuses which have so far been used, there is known an apparatus wherein a dispersion plate made of porous ceramic is fixedly secured by bonding by means of an adhesive below the inner bottom surface of a retort in such a manner that it extends in substantially parallel relationship with the inner bottom surface of the retort so as to define a space between it and the inner bottom surface, and a nozzle apparatus having a nozzle for injecting air or a treating gas is provided in the space defined between the lower surface of the gas dispersion plate and the inner bottom surface of the retort.

The points at issue of this prior art example are: (1) the gas dispersion is liable to break or crack since it is made of ceramic, (2) to maintain the fixing of the gas dispersion plate to the inner side wall surface of the retort, it is necessary to cool down the retort from the outer periphery thereof so as to prevent the melting of the adhesive by heat, thus causing heat losses, and (3) in order to protect the applied adhesive, the internal temperature of the retort must be lowered to 700°C prior to stopping the fluidization of the fluidized bed, which results in lossess in operation time and heat, etc.

Another prior art gas dispersion nozzle apparatus devised to solve the points at issue of the above-mentioned first prior art example comprises a gas dispersion plate fixedly secured below the inner side wall surface of a retort in parallel with the inner bottom surface thereof to prevent the applied adhesive from melting by heat, and a multiplicity of nozzle tubes mounted, respectively, in a plurality of longitudinal through-holes formed in the gas dispersion plate, each of the nozzle tubes having a plurality of horizontal nozzles located above the dispersion plate.

This second prior art example has also the following points at issue.
(1) Many complicated working processes are required to fabricate the nozzle tubes, thus rendering the cost of the gas dispersion nozzle apparatus expensive.
(2) Because of high pressure losses in the nozzle tubes, provision of a blower having a large capacity is required, and in case it is used in a heat-circulation type fluidized bed, the circulation efficiency thereof is poor.
(3) Since the injection nozzles are located horizontally, fluidizing particles are liable to make an ingress into the nozzles causing frequent clogging of the nozzles with the particles.
(4) Since the gas dispersion plate has a plurality of nozzle tube mounting holes formed therein and supports the weight of the fluidizing particles, the maximum allowable internal temperature of the retort is limited, to 1,100°C, and therefore the apparatus cannot be used at temperatures exceeding it, etc..

In JP-U1-61-1003796, a gas nozzle apparatus is disclosed. All nozzle pipes are arranged radially to a gas supply pipe means. It is not possible to control the flow rate of the fluidizing gas in the retort individually in the outer peripheral zone and in the central zone thereof, respectively. The area below the radially extending nozzle pipes and the ring-shaped pipe, which is arranged adjacent to the inner side wall of a retort, is supplied with a desired rate of fluidizing gas. The flow rate may be controlled; however, the flow rate is constant for all the area below the pipes.

In JP-A-57-41573, a method for measuring a temperature inside a gas dispersion nozzle apparatus for use in a fluidized bed furnace is disclosed and in JP-B1-48-3750 a fluidized bed furnace is disclosed in which the gas supply means are arranged outside a retort. Moreover, a plurality of nozzle pipes is connected to the gas supply means and extends through the wall of the retort, and wherein the nozzle pipes are arranged parallel to one another.

It is, therefore, an object of the invention to provide a gas dispersion nozzle apparatus wherein the flow rate of the fluidizing gas in the retort can be controlled in any desired manner and individually in the outer peripheral zone and the central zone.

This object is solved by the characterizing features of Claim 1.

The above and other advantages, aspects and objects of the present invention will become apparent to those skilled in the art by making reference to the following description and the accompanying drawings in which preferred embodiments incorporating the principles of the present invention are shown.
Fig. 1 is a schematic, front and longitudinal sectional view of a fluidized bed furnace comprising one embodiment of the gas dispersion nozzle apapratus according to prior art document JP-U1-61-133 796.
Fig. 2 is a schematic, plan and cross-sectional view of the fluidized bed furnace shown in Fig. 1;
Fig. 3 is a schematic, enlarged plan and longitudinal sectional view of one embodiment of the gas dispersion nozzle apparatus shown in Fig. 1;
Fig. 4 is an enlarged sectional view taken along line IV - IV in Fig. 3;
Figs. 5 and 6 are a schematic plan view and a schematic, partially broken front view, respectively, showing other modifications.
Fig. 7 is a schematic plan view showing another version or modification of the gas dispersion nozzle apparatus;
Fig. 8 is a schematic front and longitudinal sectional view of a fluidized bed furnace comprising an embodiment of the gas dispersion nozzle apparatus according to the present invention;
Fig. 9 is a schematic, enlarged front and longitudinal sectional view of the embodiment of the gas dispersion nozzle apparatus shown in Fig. 8, and
Fig. 10 is a schematic plan view showing the embodiment of Fig. 9, partially in section.

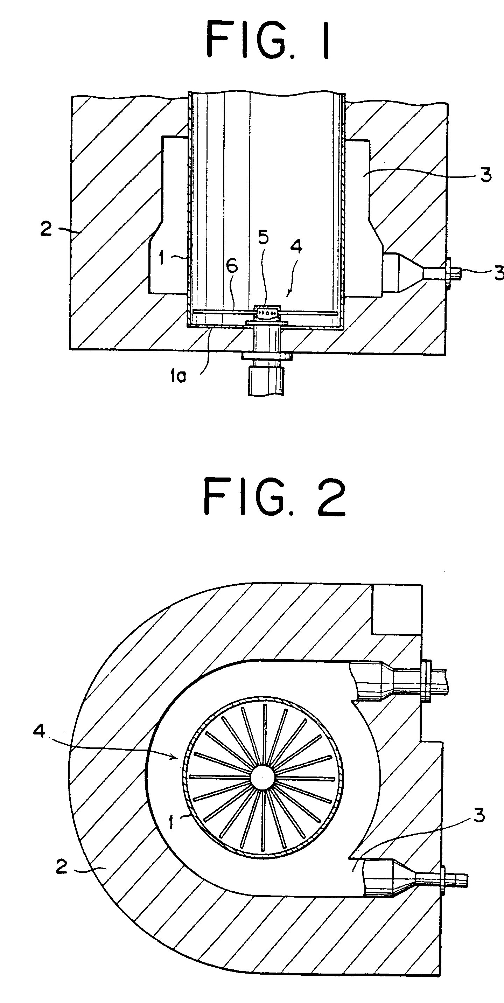

An embodiment of a gas dispersion nozzle apparatus according to prior art will first be described below with reference to Figs. 1 to 4.

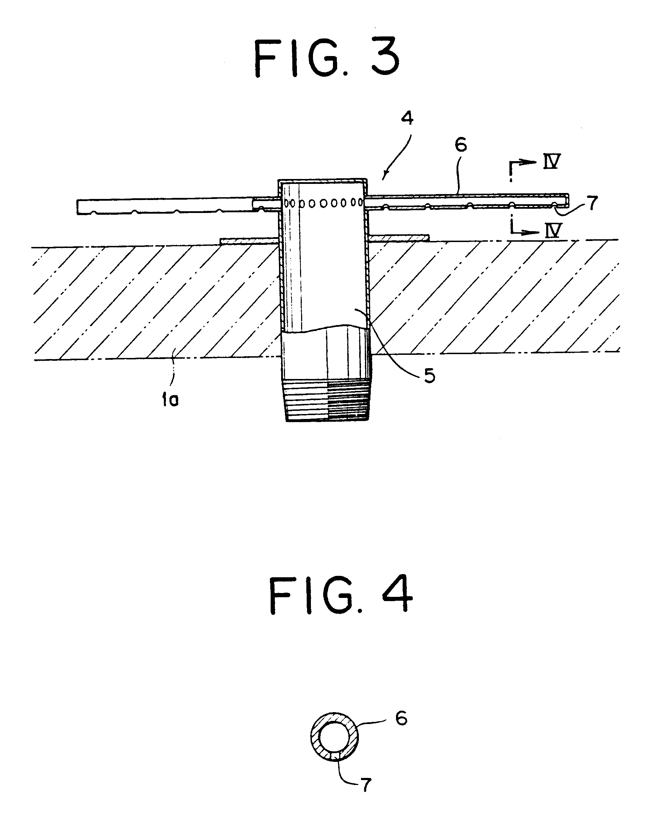

In the drawings, reference numeral 1 denotes a retort surrounded and supported by a heat-insulating material 2, 3 a combustion chamber defined around the lower portion of the retort 1, and 3a a burner. The above-mentioned retort 1 has a required amount of fluidizing particles, not shown, disposed therein. Reference numeral 4 denotes a gas dispersion pipe section provided in the bottom portion of the retort 1. This gas dispersion pipe section 4 comprises a central gas supply pipe 5 located in the central part of the bottom portion of the retort 1, and a plurality of redially extending nozzle pipes 6 attached to the central gas supply pipe 5. The central gas supply pipe 5 extends through the retort 1, and its upper end is closed and its lower end is connected to a pipeline installed outside the fluidized bed furnace. Further, the nozzle pipe 6 is attached to the central gas supply pipe 5 at a position slightly spaced away from the bottom surface of the retort 1. Each of the nozzle pipes 6 has a plurality of downward nozzle holes 7 formed through the lower wall thereof at intervals of a proper spacing, for example, 30 mm in the longitudinal direction thereof, as shown in Fig. 4.

In the above-mentioned arrangement, the fluidizing gas which flows into the central gas supply pipe 5 is injected from the latter through the nozzle holes 7 formed in each of the nozzle pipes 5 towards the bottom surface of the retort 1. The thus injected fluidizing gas will strike against the inner bottom surface of the retort 1 and turn reversely and move upwards thereby fluidizing the fluidizing particles during their upward movement.

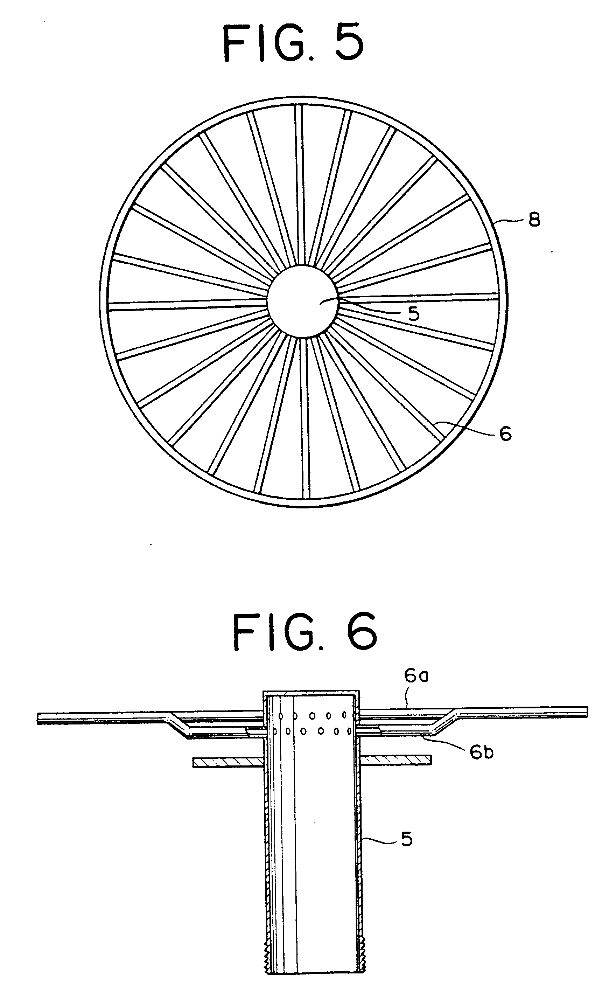

In case the diameter of the retort 1 is great, a satisfactory fluidization in the wall surface portion cannot be achieved only by means of the radially extending nozzle pipes 6 as shown in the above-mentioned embodiment. Therefore, a modified embodiment as shown in Fig. 5 can be effectively used wherein the leading ends of each of the radially extending nozzle pipes 6 are connected to a ring-shaped pipe 8 and the pipe 8 has also a plurality of downward nozzle holes formed through the lower portion thereof and at intervals of a proper spacing along the circumference thereof.

Further, in case the diameter of the retort 1 is greater than the above-mentioned case, another modified embodiment is effectively used wherein straight nozzle pipes 6a and stepped nozzle pipes 6b are connected in order to increase the number of the nozzle pipes 6 in such a manner that they alternate in the horizontal direction and deviate from one another in the vertical direction, as shown in Fig. 6, to thereby avoid their mutual interference.

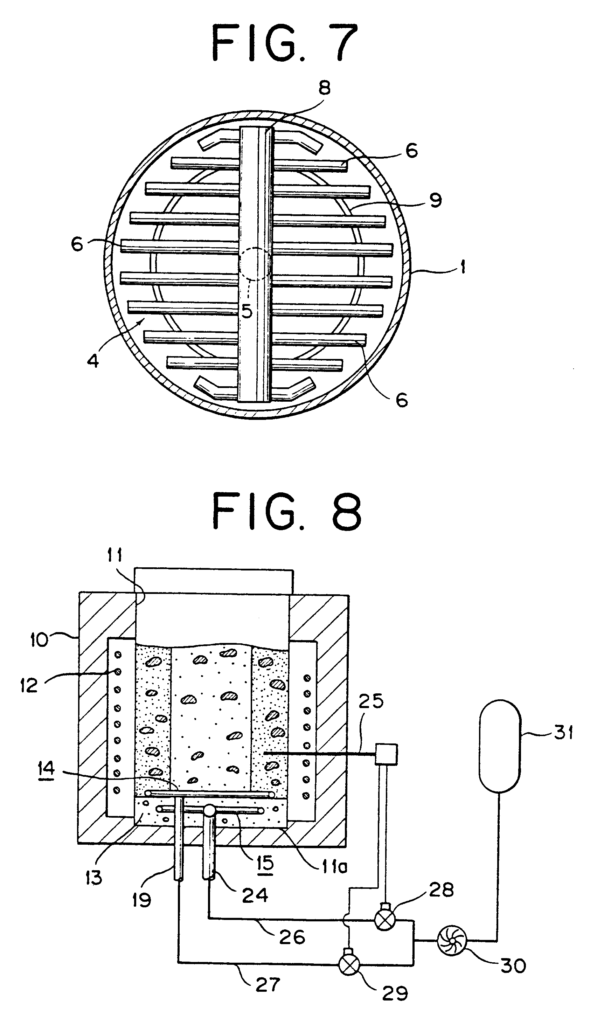

Another modification of the above-mentioned embodiment is shown in Fig. 7.

According to this modified embodiment, there is shown a gas dispersion nozzle section 4 wherein a connection pipe 8 with a large diameter extending through the centre of the retort 1 is connected to a central gas supply pipe 5 so as to communicate with the latter, and a plurality of nozzle pipes 6 are connected to the connection pipe 8 so as to communicate with the latter and at right angles to the latter and in parallel relationship with one another, each of the nozzle pipes 6 having a large number of downward nozzle holes 7 formed through the lower wall thereof. Further, reference numeral 9 denotes a nozzle bed installed on the inner bottom surface of the retort 1 so as to support the nozzle pipes 6.

Since the above-mentioned gas dispersion nozzle apparatus according to the first embodiment can inject the fluidizing gas uniformly around the retort 1 so as to form a uniform fluidized bed, it can be used to achieve a satisfactory fluidization without any problem in case of heating of metals for hardening of them at intermediate and low temperatures, and nitriding treatment of them.

However, this gas dispersion nozzle apparatus has the following points at issue in case of heat treatment and cementation treatment at high temperatures, such as, for example, hardening of high-speed-steel.
1. In case of cementation treatment, propane or butane gas or alcohol is mixed into the fluidizing gas to produce a cementation atmosphere, but the cementation atmospherical gases begin to decompose immediately after they have passed through each of the nozzle pipes and emerged out of the nozzle holes. Further, since the retort is heated by a heater, not shown, from the outer periphery thereof, the temperature of the inner side wall portion of the retort becomes more or less higher than that of the central portion thereof. Therefore, the decomposition of gas in the vicinity of the nozzle holes of the nozzle pipes near the inner side wall surface of the retort becomes more violent than that in the central zone thereof. As a result, in case cementation or high carbon cementation is made for an extended period of time, carbon comes to deposit on the internal side wall surface of the retort in vicinity of the nozzle holes. Since a poor fluidization is caused by the deposited carbon, it is necessary to increase the fluidizing gas flow or to effect burn-out frequently after the completion of the treatment to prevent the accurence of poor fluidization, and therefore the treatment operation per se becomes troublesome.
2. Since hardening of high-speed-steel needs to be carried out at a temperature higher than 1,200°C, in case of heating the retort by means of a heater installed outside thereof, it is necessary to effect it carefully so as not to melt or damage the inner side wall surface of the retort. For example, the fluidizing gas flow is somewhat increased to obtain better heat transfer from the retort to the fluidizing particles. However, by so doing, the amount of use of nitrogen gas will increase thus increasing the running cost.

For this reason, according to an embodiment of the present invention described hereinbelow, there is provided a gas dispersion nozzle apparatus wherein the flow rate of the fluidzing gas in the retort can be controlled in any desired manner and individually in the outer peripheral zone and the central zone thereof, respectively.

The second embodiment of the present invention for achieving the above-mentioned object will be described in detail hereinbelow with reference to Figs. 8 to 10.

As shown in Fig. 8, a cylindrical retort 11 whose upper end is open is provided in a fluidized bed furnace 10, this retort 11 has a heater 12 mounted on the outer periphery thereof, and a gas dispersion nozzle apparatus 13 mounted on the inner bottom surface thereof.

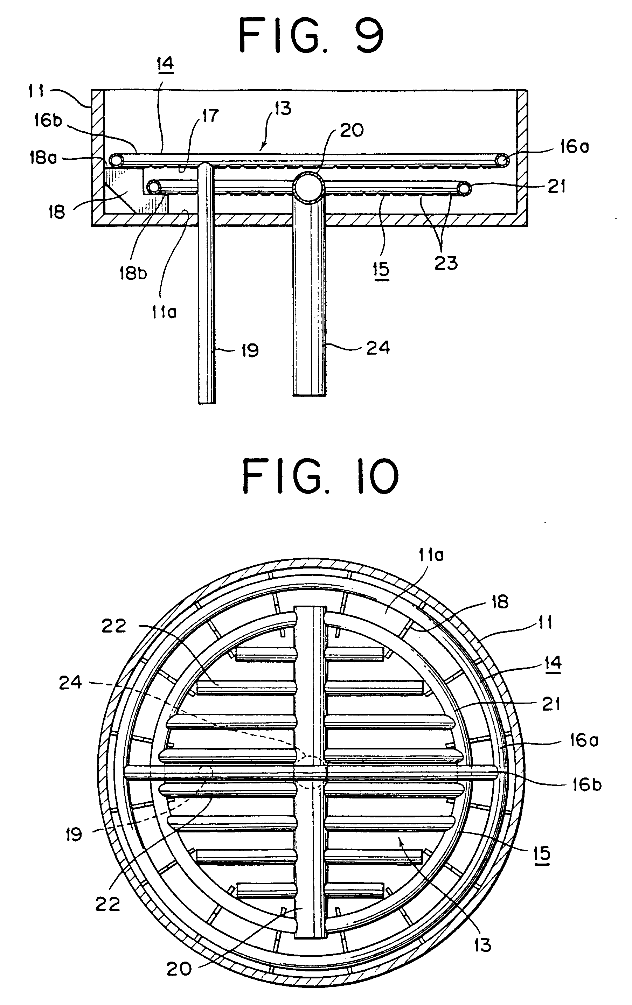

The gas dispersion nozzle apparatus 13 comprises, as shown in Figs. 9 and 10, a ring-shaped, outer peripheral zone gas dispersion nozzle section 14 and a central zone gas dispersion nozzle section 15, both of which are mounted in parallel relationship with the inner bottom surface of the retort. The outer peripheral gas dispersion nozzle section 14 comprises at least one ring-shaped nozzle pipe 16a having a plurality of downward nozzle holes 17 formed through the lower surface thereof, and a outer peripheral zone connecting pipe 16b for connecting said ring-shaped nozzle pipe 16a with a pipe 19 which extends through the bottom portion of the retort into the latter for supplying a fluidizing gas such as, for example, air or a cementation atmosherical gas into the outer peripheral zone gas dispersion nozzle section 14. The outer peripheral zone gas dispersion nozzle section 14 is mounted on a higher portion 18a of a nozzle bed 18 mounted on the inner bottom surface 11a of the retort 11.

Whilst, the central zone gas dispersion nozzle section 15 comprises a connection pipe 20 of a large diameter extending through the centre of the retort in parallel relationship with the inner bottom surface thereof; at least one ring-shaped nozzle pipe 21 having a plurality of downward nozzle holes formed through the lower surface thereof in the circumferential direction, said ring-shaped nozzle pipe 21 being connected to the connection pipe 20 so as to communicate with the latter; a plurality of nozzle pipes 22 each having a plurality of downward nozzle holes formed through the lower surface thereof, said nozzle pipes 22 extending in parallel relationship with one another and being connected to said pipe 20 of a large diameter at right angles thereto so as to communicate with the latter; and a central zone gas supply pipe extending vertically through the bottom portion of the retort into the latter and being connected to said pipe 20 of a large diameter at the central part thereof so as to communicate with the latter to thereby a fluidizing gas into the central zone gas dispersion nozzle section 15. For central zone gas dispersion nozzle section 15 is supported on a lower portion 18b of the nozzle bed through the ring-shaped nozzle pipe 21. The central zone gas dispersion nozzle section 15 is mounted at a lower position than the outer peripheral zone gas dispersion nozzle section 14 so as to avoid therein mutual interference. It is, of course, needless to say that there is no problem if the vertical positional relationship between the outer peripheral zone gas dispersion nozzle section 14 and the central zone gas dispersion nozzle section 15 is reversed to the above-mentioned one.

By making the arrangement as mentioned hereinabove, a fluidizing gas is injected from the outer peripheral zone gas dispersion nozzle section 14 towards the inner bottom surface 11a of the retort 11 near the inner side wall surface threof, whilst the fluidizing gas is injected from the central zone gas dispersion nozzle section 15 towards the central zone of the inner bottom surface 11a of the retort 11. The injection of the fluidizing gas from the outer peripheral zone gas dispersion nozzle section 14 and the central zone gas dispersion nozzle section 15, respectively, can be controlled independently by means of a fluidizing gas flow-rate controller device which will be described below.

Stating in brief, the flow rate of the fluidizing gas to be injected from the outer peripheral zone gas dispersion nozzle section 14 and that of the fluidizing gas to be injected from the central zone gas dispersion nozzle section 15 can be controlled by detecting the internal temperature of the retort 11 by means of a thermo-coupler 25 installed in the retort 11 as shown in Fig. 8, and controlling flow control valves 28 and 29 installed in gas supply paths 26 and 27 of gas supply pipes 19 and 24, respectively, based on the thus detected temperature.

Further, in Fig. 8, reference numeral 30 denotes a blower, and 31 a fluidizing gas supply source such as, for example, a pressurized gas reservoir or tank. Further, by controlling the flow rate of fluidizing gas, the internal temperature and the side wall temperature of the retort 11 can always be kept approximately constant.

In the prior art arrangement, carbon tends to deposit on the inner surface of the retort 11 in the vicinity of the nozzle holes in case cementation treatment or high carbon content cementation treatment is made for an extended period of time, however, by making arrangement as shown in Fig. 8 so as to increase the fluidizing gas flow in the outer peripheral zone than that in the central zone, it is possible to reduce the tendency of deposition of carbon and also reduce the number of times of burn-out. Further, even where a small amount of carbon deposits on the inner surface of the retort, the occurrence of poor fluidzation can be prevented by increasing the flow rate of the fluidizing gas outer peripheral zone.

Further, in case of high temperature treatments too, the retort 11 can be prevented from melting by increasing the flow rate of the fluidizing gas in the outer peripheral zone in the same way to thereby promote the heat transfer between the retort 11 and the fluidzing bed (which is comprised of alumina particles). In this case, since the flow rate of the fluidizing gas in the central zone may be reduced or weakened slightly, the amount of nitrogen gas to be used as a fluidized gas can be reduced as compared with that in case the flow rates of the gas to be injected from the outer peripheral zone gas dispersion nozzle section and the central zone gas dispersion nozzle section, respectively, cannot be controlled individually, and therefore, the entire fluidzing gas flow through both the outer peripheral zone and the central zone needs to be controlled.

Further, in case the fluidizing gas flow in the central zone becomes poor depending on the method of charging materials to be treated in the fluidized bed furnace (for example, as in the case where a big mass is put in the central zone thereof), it is possible to increase the flow rate of the fluidizing gas only in the central zone in the reverse manner to the above-mentioned to thereby avoid the occurrence of uneven flow of fludizing gas and speed up the increase in temperature of articles to be subjected to heat treatment.

## Claims

1. A gas dispersion nozzle apparatus for use in a fluidized bed furnace with a retort (11) which is provided with fluidizing gas pipe section,
**characterized in that**
said fluidizing gas pipe section comprises:
a) An outer peripheral zone gas supply pipe means (19) whose upper end is connected to an outer peripheral zone connecting pipe (16b) disposed in parallel relationship with the inner surface of abuting portion (11a) of said retort (11) so as to communicate with each other and whose lower end is connected to the pipeline (27) installed outside said bottom portion (11a) and which extends vertically through said bottom portion (11a) at a position somewhat nearer the inner side wall surface of said retort (11) than the centre thereof;
b) a central zone gas supply pipe means (24) whose upper end is connected to a connection pipe (20) disposed in parallel relationship with the inner surface of said bottom portion (11a) so as to communicate with each other and whose lower end is connected to a pipeline (26) installed outside said bottom portion (11a) and which extends vertically through the bottom portion (11a) at a centre position of said retort (11);
c) an outer peripheral zone gas dispersion pipe means (14) consisting of said outer peripheral zone connecting pipe (16b) and at least one ring shaped nozzle pipe (16a) connected to said pipe (16) so as to communicate with each other, pipe (16a) having a plurality of downward gas nozzles (17) formed along the circumferential directions thereof, said ring shaped nozzle pipe (16a) extending to a predetermined position near the inner side wall surface of said retort (11) at a lever spaced away from the inner surface of said bottom portion (11a);
d) a central zone gas dispersion pipe means (15) consisting of said connection pipe (20), at least one ring shaped nozzle pipe (21) connected to said pipe (20) so as to communicate with each other and having a plurality of downward gas nozzles (17) formed along the circumferential direction thereof, and a plurality of nozzle pipes (22), each having a plurality of downward gas nozzles (17) formed along the longitudinal direction thereof, which are connected to said connecting pipe (20) at right angles and in parallel relationship with one another and located so as to deviate in position with said outer peripheral zone gas dispersion pipe means (14) in vertical and horizontal direction to thereby avoid their mutual interference and extend to a predetermined intermediate position between the central part of said retort (11) and the inner side wall surface thereof; and
e) means (28,29) for controlling the flow rate of fluidizing gas to be supplied into said central zone gas supply pipe means (24) and said outer peripheral zone gas supply pipe means (19), respectively, in accordance with an internal temperature of said retort (11) detected by means of a thermo coupler (25).

## Patentansprüche

1. Eine Gaszerstäuberdüse für einen Fließbettofen mit einer Retorte (11), welche mit einer Wirbelgasrohrsektion ausgebildet ist, dadurch gekennzeichnet, daß die Wirbelgasrohrsektion aufweist:
a) eine Gaszufuhreinrichtung (19) für eine äußere Randzone, deren oberes Ende mit einem Verbindungsrohr (16b) für die äußere Randzone verbunden ist, welches parallel zu einer inneren Oberfläche eines Auflagebereichs (11a) der Retorte (11) angeordnet ist, wobei Gaszufuhrrohreinrichtung (19) und Verbindungsrohr (16b) miteinander verbunden sind, und deren unteres Ende mit einer Leitung (27) verbunden ist, welche außerhalb des Bodenbereichs (11a) angeordnet ist und die sich vertikal durch den Bodenbereich (11a) an einer Stelle näher zur inneren Seitenwandoberfläche der Retorte (11) als deren Zentrum erstreckt;
b) eine Gaszufuhreinrichtung (24) für eine Zentralzone, deren oberes Ende mit einem Verbindungsrohr (20) verbunden ist, welches parallel zur inneren Oberfläche des Bodenbereichs (11a) angeordnet ist, wobei die Gaszufuhreinrichtung (24) und das Verbindungsrohr (20) miteinander verbunden sind, und deren unteres Ende mit einer Leitung (26) verbunden ist, welche außerhalb des Bodenbereichs (11a) angeordnet ist und die sich vertikal durch den Bodenbereich (11a) an einer Zentralposition der Retorte (11) erstreckt;
c) eine Gaszerstäubungsrohreinrichtung (14) für die äußere Randzone, gebildet aus dem Verbindungsrohr (16b) für die äußere Randzone und aus wenigstens einem ringförmigen Düsenrohr (16a), das an dem Rohr (16) zu deren Verbindung angeschlossen ist, wobei Rohr (16a) eine Vielzahl von nach unten gerichteten Gasdüsen (17) entlang einer Umfangsrichtung aufweist und das ringförmige Düsenrohr (16a) sich bis zu einer vorbestimmten Position nahe der inneren Seitenwandfläche der Retorte (11) erstreckt und in einem von der inneren Oberfläche des Bodenbereichs (11a) beabstandeten Niveau verläuft;
d) eine Gaszerstäubungsrohreinrichtung (15) für die Zentralzone, bestehend aus dem Verbindungsrohr (20), wenigstens einem ringförmigen Düsenrohr (21), welches zur Verbindung mit dem Rohr (20) an diesem angeschlossen ist und eine Vielzahl von nach unten gerichteten Gasdüsen (17) entlang seiner Umfangsrichtung aufweist, und einer Vielzahl von Düsenrohren (22), von denen jedes eine Vielzahl von nach unten gerichteten Gasdüsen (17) entlang deren Längsrichtung aufweist, wobei die Düsenrohre (22) unter einem rechten Winkel an das Verbindungsrohr (20) angeschlossen sind und zueinander parallel verlaufen, und sie zu der Gaszerstäubungsrohreinrichtung (14) für die äußere Randzone sowohl in vertikaler als auch horizontaler Richtung zur Vermeidung von gegenseitiger Beeinflussung versetzt angeordnet sind, und wobei sie sich bis zu einer vorbestimmten Zwischenstellung zwischen dem Zentralteil der Retorte (14) und deren innerer Seitenwandfläche erstrecken; und
e) eine Einrichtung (28,29) zur Steuerung der Flußrate des Wirbelgases, welches entsprechend der Gaszufuhrrohreinrichtung (24) für die Zentralzone und der Gaszufuhrrohreinrichtung (19) für die äußere Randzone zuführbar ist, entsprechend zu einer mittels eines Thermoelements (25) erfaßten, inneren Temparatur der Retorte (11).

## Revendications

1. Dispositif à buses de dispersion de gaz, destiné à être utilisé dans un four à lit fluidisé comportant un vase clos (11) qui est équipé d'une section à tuyaux de gaz de fluidisation,
caractérisé en ce que :
la section à tuyaux de gaz de fluidisation comprend :
a) un tuyau d'alimentation en gaz (19) de zone périphérique extérieure, dont l'extrémité supérieure est reliée à un tuyau de liaison (16b) de zone périphérique extérieure disposé parallèlement à la surface intérieure d'une partie de fond (11a) du vase clos (11) de façon qu'ils communiquent entre eux, dont l'extrémité inférieure est reliée à la tuyauterie (27) installée à l'extérieur de la partie de fond (11a) et qui traverse verticalement la partie de fond (11a) en un emplacement sensiblement plus près de la surface de paroi latérale intérieure du vase clos (11) que le centre de ce dernier;
b) un tuyau d'alimentation en gaz (24) de zone centrale, dont l'extrémité supérieure est reliée à un tuyau de liaison (20) disposé parallèlement à la surface intérieure de la partie de fond (11a) de façon qu'ils communiquent entre eux, dont l'extrémité inférieure est reliée à une tuyauterie (26) installée à l'extérieur de la partie de fond (11a) et qui traverse verticalement la partie de fond (11a) en un emplacement central du vase clos (11);
(c) des moyens à fonction de tuyau de dispersion de gaz (14) de zone périphérique extérieure, constitués du tuyau de liaison (16b) de zone périphérique extérieure et d'au moins un tuyau à buses (16a) en forme d'anneau et relié audit tuyau (16b) de façon qu'ils communiquent entre eux, le tuyau (16a) comportant plusieurs buses de gaz (17) dirigées vers le bas et formées le long de la direction circonférentielle de ce tuyau, ce tuyau à buses (16a) en forme d'anneau s'étendant en un emplacement préfixé voisin de la surface de paroi latérale intérieure du vase clos (11) à un niveau espacé de la surface intérieure de la partie de fond (11a);
d) des moyens à fonction de tuyau de dispersion de gaz (15) de zone centrale, constitués dudit tuyau de liaison (20), d'au moins un tuyau à buses (21) en forme d'anneau, relié audit tuyau (20) de façon qu'ils communiquent entre eux et comportant plusieurs buses de gaz (17) dirigées vers le bas et formées le long de la direction circonférentielle de ce tuyau, et de plusieurs tuyaux à buses (22) dont chacun comporte plusieurs buses de gaz (17) dirigées vers le bas et formées le long de sa direction longitudinale, qui sont reliés à angle droit audit tuyau de liaison (20), en étant disposés parallèlement entre eux et situés de façon à s'écarter en position des moyens à fonction de tuyau de dispersion de gaz (14) de zone périphérique extérieure suivant la direction verticale et suivant la direction horizontale, de façon à éviter ainsi une interférence mutuelle entre eux, et qui s'étendent jusqu'en un emplacement intermédiaire préfixé situé entre la partie centrale du vase clos (11) et la surface de paroi latérale intérieure de ce dernier; et
e) des moyens (28, 29) servant à régler, en fonction de la température intérieure du vase clos (11) détectée au moyen d'un thermocouple (25), le débit de gaz de fluidisation devant être introduit respectivement dans les moyens à fonction de tuyau d'alimentation en gaz (24) de zone centrale et les moyens à fonction de tuyau d'alimentation en gaz (19) de zone périphérique extérieure.
